# EUROPEAN PATENT APPLICATION

(11) **EP 1 658 889 A1**
(43) Date of publication of application: **24.05.2006**
(21) Application number: 04447254.6
(22) Date of filing: 19.11.2004
(51) Int. Cl.: B01D 69/08, B01D 69/10

(54) **Longitudinal reinforced self-supporting capillary membranes and method for manufacturing thereof**

(71) Applicant: "VLAAMSE INSTELLING VOOR TECHNOLOGISCH ONDERZOEK", afgekort "V.I.T.O.", 2400 Mol (BE)
(72) Inventor: Beckers, Herman, 3271 Scherpenheuvel-Zichem (BE); Doyen, Willy, 2160 Wommelgem (BE); Dotremont, Chris, 3010 Kessel-Lo (BE)
(74) Representative: Van Malderen, Joëlle

(57) **Abstract**

The present invention is related to a process for manufacturing asymmetric self-supporting braid reinforced capillary ultra- or micro-filtration membranes (1), comprising the subsequent steps of pulling a braid through a spinneret and coating the braid (5) with dope, wherein the braid is impregnated with a liquid prior to said coating step, said liquid having a viscosity arranged to prevent dope embedding said braid (5).

## Description

### Field of the invention

The present invention is related to self-supporting asymmetric capillary membranes which are longitudinally reinforced by an internal braid, and to a method of production thereof.

### State of the art

Semipermeable composite membranes or reinforced semipermeable membranes are known. They are currently used as e.g. ultra- and micro-filtration membranes for membrane bioreactors (MBR) and particle filtration on liquids.

US 3,676,193 describes a process for the manufacture of a tubular reinforced membrane. The braided material is completely embedded. The manufacturing process is done with a casting bob. Such a method is however not practical when producing capillary membranes. US 4,061,821 describes a semipermeable composite membrane consisting of a porous substance and a reinforcing material made of fibrous material embedded in the wall of the porous substance. US 5,472,607, "Hollow fiber semipermeable membrane of tubular braid" describes a braided reinforced membrane coated on the outside of the membrane. The membrane is not self-supporting. The braid is so flexible that it does not have a circular cross-section and collapses with finger pressure. The voids of the braid are relatively much larger as the pores in the film but are small enough to inhibit substantial penetration of the dope. Coating is done by a unique nozzle design. The reinforcing material is partially filled with dope and the film thickness is between 0,01 and 0,1 mm. This partially filling up to maximum one third of the thickness is essential because the film is not self-supporting and would not withstand the pressure difference over the membrane without reinforcement.

During fabrication one must prevent that dope is penetrating the braid too much and closes the inner hole of the braid. Hayano et al. (US 4,061,821) solved this problem by using a special braid. In US 5,472,607 it is stated that the voids of the braid must be small enough to inhibit substantial penetration of the polymer solution.

EP 1,321,178 A2 describes a braid-reinforced hollow fiber membrane with an inner layer having a spongeous structure with micro pores having a diameter less than 10 µm. The penetration of the polymer film is preferably less than 30 % of the reinforcing thickness.

### Aims of the invention

The present invention aims to provide a novel semipermeable reinforced capillary membrane and a cheap and easy method for producing same. The invention aims at solving the problem stated in the prior art of dope penetrating the braid too much, thereby closing the inner hole of the braid, in an alternative, cheap and easily implemented way.

### Summary of the invention

A first aspect of the present invention concerns a process for manufacturing asymmetric self-supporting braid reinforced capillary ultra- or micro-filtration membranes, comprising the subsequent steps of pulling a braid through a spinneret and coating the braid with a dope, characterised in that the braid is impregnated with a liquid prior to said coating step, said liquid having a viscosity arranged to prevent dope embedding completely said braid. Preferably, said viscosity lies between 0,01 and 5 Pa.s or more preferably between 0,05 and 1 Pa.s.

The process of the present invention preferably further comprises the steps of a controlled vapour phase followed by coagulation of the dope in a hot water bath, further washing out of solvent and water soluble additives and drying, or coagulation in a mixture of non-solvent and solvent, followed by washing and drying.

The liquid with arranged viscosity preferably is a solution of a solvent, an optional non-solvent and a viscosity increasing substance. Said viscosity increasing substance can comprise a water soluble polymer, such as polyvinyl pyrrolidone (PVP) or polyethylene glycol (PEG) and/or an inorganic hydrophilic salt such as LiCl.

The dope used in the present invention preferably comprises organic solvent, polymer resin and a hydrophilic compound. Said organic solvent is preferably selected from the group consisting of N-methyl pyrrolidone, dimethyl formamide, dimethyl acetamide or a mixture thereof. Said polymer resin is advantageously selected from the group consisting of polysulphone, polyethersulfone, polyvinylidenedifluoride (PVDF), polyacronitrile, polyvinylchloride, polyimide, polyamideimide and polyesterimide. Said hydrophilic compound can be selected from the group consisting of polyethylene glycol (PEG), polyvinylpyrrolidone (PVP), glycerol or a mixture thereof.

The process according to according to the present invention can use braid material selected from the group consisting of polyamide 6/6, polyamide 12, polypropylene, polyethylene, aramid and polyester.

Another aspect of the present invention is an asymmetric self-supporting braid reinforced capillary ultra- or micro-filtration membrane obtainable with the process according to the present invention.

Yet another aspect of the present invention concerns the use of an asymmetric self-supporting braid reinforced capillary ultra- or micro-filtration membrane obtainable with the process according to the present invention in a membrane bioreactor (MBR) or for particle filtration on liquids.

Yet another aspect of the present invention concerns a spinneret for manufacturing an asymmetric self-supporting braid reinforced capillary ultra- or micro-filtration membrane, said spinneret comprising an interior chamber comprising an upper opening arranged for feeding a braid and an exit opening arranged for evacuating said braid, and an exterior chamber separated from said interior chamber by an interior chamber wall and comprising a dope feed opening, said inner chamber and outer chamber co-operating to form an outlet opening, characterised in that said inner chamber further comprises a lumen liquid opening arranged to feed a liquid with a viscosity between 0,01 and 5 Pa.s.

### Short description of the drawings

Fig. 1 a and b respectively represent a cross section diagram and picture of the capillary membranes according to the present invention.

Fig. 2 represents schematically the cross-section in longitudinal direction of a spinneret which can be used to practice the present invention.

### Detailed description of the invention

The present invention relates to a process for making self-supporting capillary membranes which are longitudinally reinforced by an internal braid. The invention is best explained with reference to the drawings, which are to be considered as non-limiting to the scope of the present patent application.

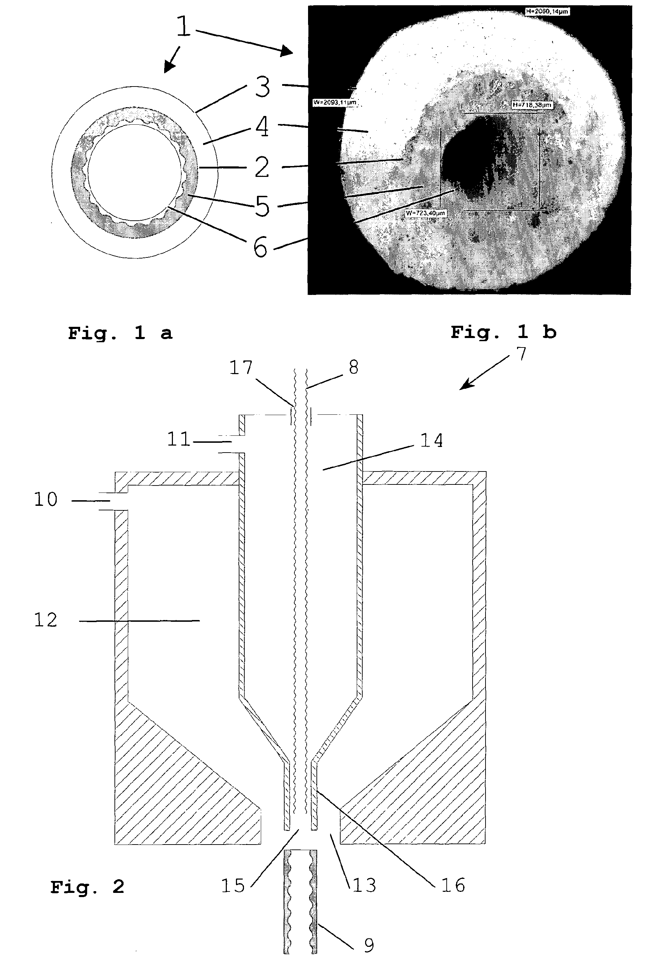

Referring to fig. 1 a and b, a capillary reinforced membrane (1) is disclosed. The reinforced membrane (1) consists of a braid (5) on which outer diameter (2) a membrane (4) is coated during the spinning process. The reinforced membrane (1) has an internal diameter (6), which is the inner diameter of the braid and an external diameter (3), which is the outer diameter of the coated membrane layer.

In order to produce such a capillary reinforced membrane a special spinneret is used, as can be seen in fig. 2. The production steps are as follows:
- a braid is fed through the upper opening (17) of spinneret (7) into an interior chamber (14). The braid is a twisted hollow cord made out of for example polyester, polypropylene, polyethylene or polyamide with an outer diameter in the range of 0,5 to 5 mm.
- in this chamber (14) the braid is impregnated by a liquid. This liquid is fed through opening (11) by pressure difference or by means of a pump.
- a viscous solution of a polymer, a hydrophilic compound and an organic solvent, called dope, is fed to the spinneret (7) through opening (10) and is extruded through the outlet opening (13) of the spinneret.
- the braid leaves the spinneret through opening (15) and is coated then by the extruded dope
- the further steps (removing of the solvent, etc.) are state-of -the-art in the making of asymmetric ultra- and micro-filtration membranes

The liquid used for the impregnation of the braid ("lumen") is a solvent, a non-solvent or a mixture of both plus a substance to increase the viscosity, for instance polyvinylpyrrolidone (PVP) or polyethylene glycol (PEG). The amount of this substance is so chosen to have a viscosity that is low enough for easily filling of the braid and high enough to prevent that the dope penetrates the braid. When a solvent or a solvent with only some percentage of non-solvent is used together with the substance to increase the viscosity for the spinning of membranes, the layer with smallest pores is found at the outer diameter (3) (skin at the outside) while the pores at the inner diameter (2) of the membrane are much larger. When a water / solvent mixture is used, the layer with the smallest pore size is found at the inner diameter (2) of the membrane (skin on the inside).

The process for making braid reinforced capillary membranes is much simpler with the present method. Further, there are no very stringent requirements to be put to the braid: the viscosity of the impregnating liquid can easily be adapted to the braid one uses.

### Examples

The diameters were measured with a microscope type Axioplan 2 from Zeiss. The pure water flux was measured on a small module containing only one membrane of about 10 cm length by putting water at a pressure of 1 bar on the module and by weighing the amount of water coming out of it during a fixed time. The mean pore size was determined with a capillary flow porometer from PMI, type CFP-1200-A. The other pore sizes were measured with a FESEM from Jeol, type JSM-6340F. The tensile strength was measured on an Instron type 1195.

### Example 1

- Reinforcing braid: made from polyamide 6/6, composed out of 36 monofilaments of 110 dtex, inner diameter: 0,65 mm, outer diameter: 1,15 mm
- Dope composition: 20 wt.-% polyether sulphone (Radel A-100 from Solvay), 10 wt.-% polyvinylpyrrolidone ("PVP"; K90 from BASF) and 9 wt.-% glycerol dissolved in 61 wt.-% N-methyl pyrrolidone ("NMP").
- Lumen liquid composition: 90 wt.-% NMP; 10 wt.-% PVP K90 supplied to the spinning head under a pressure of 0,2 bar. The viscosity at 20°C is 0,2 Pa.s
- Spinning conditions:
   - coagulation liquid: water at 65 °C
   - air gap above liquid level: 8 cm
   - spinning speed: 7 m/min (condition A) and 11 m/min (condition B)
   - dope supply: 8,7 cm³/min

### Characterisation of finished product:

| Condition | A | B |
|---|---|---|
| Outer diameter (mm) | 1,9 | 1,7 |
| Pure water flux at 20 °C (1/h.m².bar) | 6300 | 4500 |
| Mean pore size at outer skin (µm) | 0,15 µm | 0,12 µm |
| Pore size at inner diameter of coating (µm) | +/- 20 µm | +/- 20 µm |
| Tensile strength (N) | 100 | 112 |

The membrane was only superficially coated on the outer diameter of the reinforcing braid. The structure was asymmetric, with the smallest pores at the outer diameter.

### Comparative example 1

With the same dope as in example 1 a capillary membrane was made without reinforcing braid. The outer and inner diameters were respectively 2,25 mm and 1,2 mm. The tensile strength was only 10,7 N.

### Comparative example 2

The same reinforced membrane was made as described in example 1 but without impregnating the reinforcement braid with lumen liquid. The central opening of the braid was completely filled with dope.

### Comparative example 3

The same reinforced membrane was made as described in example 1 (condition A) but at a temperature of 70 °C and with a lumen liquid composition of 45 wt.-% water, 55 wt.-% NMP and 10 wt.-% PVP K-90. The central opening was open and the smallest pores (pore size of 0,11 µm) were found at the interface of the braid and the membrane.

### Applications

The capillary membranes obtained with the method according to the present invention can be deployed as e.g. ultra- and micro-filtration membranes for membrane bioreactors (MBR) and for particle filtration on liquids.

## Claims

1. A process for manufacturing asymmetric self-supporting braid reinforced capillary ultra- or micro-filtration membranes, comprising the subsequent steps of pulling a braid through a spinneret and coating the braid with a dope, **characterised in that** the braid is impregnated with a liquid prior to said coating step, said liquid having a viscosity arranged to prevent dope embedding completely said braid.

2. The process according to claim 1, wherein said viscosity lies between 0,01 and 5 Pa.s.

3. The process of claim 1 or 2 further comprising the steps of a controlled vapour phase followed by coagulation of the dope in a hot water bath, further washing out of solvent and water soluble additives and drying.

4. The process of claim 1 or 2 further comprising the steps of coagulation in a mixture of non-solvent and solvent, followed by washing and drying.

5. The process according to any of the claims 1 to 4 wherein the liquid with arranged viscosity is a solution of a solvent, an optional non-solvent and a viscosity increasing substance.

6. The process of claim 5 wherein said viscosity increasing substance comprises a water soluble polymer, such as polyvinyl pyrrolidone (PVP) or polyethylene glycol (PEG) and/or an inorganic hydrophilic salt such as LiCl.

7. The process as in any of the claims 1 to 6, wherein the dope comprises organic solvent, polymer resin and hydrophilic compound.

8. The process as in claim 7, wherein said organic solvent is selected from the group consisting of N-methyl pyrrolidone, dimethyl formamide, dimethyl acetamide or a mixture thereof.

9. The process as in claim 7 or 8, wherein said polymer resin is selected from the group consisting of polysulphone, polyethersulfone, polyvinylidenedifluoride (PVDF), polyacronitrile, polyvinylchloride, polyimide, polyamideimide and polyesterimide.

10. The process as in any of the claims 7 to 9, wherein said hydrophilic compound is selected from the group consisting of polyethylene glycol (PEG), polyvinylpyrrolidone (PVP), glycerol or a mixture thereof.

11. The process according to any of the claims 1 to 10, wherein the braid material is selected from the group consisting of polyamide 6/6, polyamide 12, polypropylene, polyethylene, aramid and polyester.

12. An asymmetric self-supporting braid reinforced capillary ultra- or micro-filtration membrane obtainable with the process according to any of the claims 1 to 11.

13. Use of an asymmetric self-supporting braid reinforced capillary ultra- or micro-filtration membrane obtainable with the process according to any of the claims 1 to 11 in a membrane bioreactor (MBR) or for particle filtration on liquids.

14. A spinneret for manufacturing an asymmetric self-supporting braid reinforced capillary ultra- or micro-filtration membrane, said spinneret (7) comprising an interior chamber (14) comprising an upper opening arranged for feeding a braid (8) and an exit opening (15) arranged for evacuating said braid, and an exterior chamber (12) separated from said interior chamber (14) by an interior chamber wall (16) and comprising a dope feed opening (10), said inner chamber (14) and outer chamber (12) co-operating to form an outlet opening (13),
**characterised in that** said inner chamber further comprises a lumen liquid opening arranged to feed a liquid with a viscosity between 0,01 and 5 Pa.s.
